# DEMANDE DE BREVET EUROPEEN

(11) **EP 1 207 421 A1**
(43) Date de publication de la demande: **22.05.2002**
(21) Numéro de dépôt: 01870245.6
(22) Date de dépôt: 16.11.2001
(51) Int. Cl.: G03B 42/04

(54) **Methode et dispositif d'acquisition et de montage d'images radiographiques**

(30) Priorité: 16.11.2000 BE 200000731
(71) Demandeur: Lathuy S.C.S., 6280 Gerpinnes (BE)
(72) Inventeur: Lathuy, M. Jean-Marie, 6280 Gerpinnes (BE)
(74) Mandataire: Van Straaten, Joop

(57) **Abrégé**

L'obtention d'une image radiographique d'une région d'un objet (37) dont les dimensions sont supérieures aux dimensions d'acquisition radiographique usuelles est rendue possible grâce à l'utilisation d'au moins deux surfaces radio-sensibles (1,2) disposées dans un même plan ou dans plusieurs plans parallèles adjacents et de manière à présenter une zone de superposition partielle (40) lors de leur exposition aux rayons X par une source radiogène (36). Au moins un repère commun d'alignement radio-opaque (4) est disposé dans un plan central des rayons X (31) et au droit de la zone de superposition partielle (40) de manière à ce que l'image de ce repère d'alignement (4) se forme sur les au moins deux surfaces (1,2) avec une erreur de parallaxe considérablement réduite.

Les images radiographiques ainsi acquises sur les surfaces radio-sensibles peuvent ensuite être assemblées par superposition des images du repère d'alignement (4).

## Description

### Domaine de l'invention :

L'invention se rapporte à une technique de radiographie du corps humain ou animal, et en particulier à une technique concernant l'obtention d'images radiographiques des membres inférieurs en leur totalité et/ou l'obtention d'images radiographiques de la colonne vertébrale en sa totalité.

### Etat de la technique :

Pour obtenir de telles images, il est courant d'utiliser une surface radio-sensible telle qu'un film radiographique
ou un écran photostimulable (communément appelé écran phosphore), généralement contenue dans un support radio-sensible tel qu'un réceptacle étanche à la lumière du jour (communément appelé «cassette») et soumise à des rayons X après que ceux-ci aient traversé un segment à explorer.
L'obtention d'une image d'un grand segment, tel qu'un membre inférieur dans sa totalité, nécessite une surface radio-sensible de grandes dimensions ayant des hauteurs variant par exemple de 90 à 120 cm.
En radiographie conventionnelle, les dimensions usuelles des surfaces radio-sensibles sont de 36cm x 43cm, ce qui est clairement insuffisant. Il existe des films spéciaux de grandes dimensions, mais ceux ci sont fort coûteux et nécessitent des installations de traitement appropriées.
D'autre part, les écrans photostimulables actuellement disponibles sur le marché sont limités au format maximal de 36cm x 43cm. L'exploration d'un segment de 90 à 120 cm de hauteur requiert donc l'utilisation de plusieurs écrans photostimulables.

L'orientation très nette de la technique radiographique actuelle vers l'utilisation de l'imagerie numérique au moyen d'écrans photostimulables a donc justifié le développement d'une méthode et d'un dispositif d'acquisition et de montage d'images radiographiques permettant l'obtention d'une image d'un grand segment dans sa totalité.

### Résumé de l'invention :

La méthode consiste à acquérir deux ou plusieurs images radiographiques d'un segment d'un objet à radiographier sur deux ou plusieurs surfaces radio-sensibles positionnées de manière à se chevaucher au moins partiellement, définissant ainsi une zone de superposition. On peut ensuite reconstituer une image d'ensemble complète du segment par assemblage des deux ou plusieurs images en faisant se chevaucher les parties d'images correspondantes.

De préférence, il est également fait usage d'un repère commun d'alignement radio-opaque placé dans ou au droit de la zone de superposition, de façon à obtenir l'image de ce repère sur chaque surface radio-sensible. Ledit repère commun d'alignement est positionné dans un plan central des rayons X perpendiculaire au plan d'une surface radio-sensible de manière à réduire fortement des erreurs de parallaxe. Les images de ce repère commun d'alignement permettront ultérieurement de reconstituer l'image d'ensemble complète du segment avec grande précision par superposition desdites images dudit repère.

Etant donné qu'il est possible que les bords des surfaces radio-sensibles ne soient pas substantiellement parallèles entre eux lors de l'acquisition des images, il est fait usage dans certains cas de plusieurs - de préférence deux - repères d'alignement radio-opaques dans ou au droit de la zone de superposition, de façon à obtenir l'image de ces repères d'alignement sur chaque surface radio-sensible.
Ceci permettra ultérieurement de reconstituer l'image d'ensemble en tenant compte de ce défaut de parallélisme lors de l'acquisition.

La forme des repères d'alignement est généralement quelconque, et préférablement un cercle ou une croix réticulaire.

La dimension des repères d'alignement est aussi petite que possible de façon à ne pas gêner la lecture de l'image radiographique. De préférence au moins une des dimensions des repères d'alignement est comprise entre une et cinq fois l'inverse de la résolution graphique des images acquises. Ceci augmentera la précision de l'assemblage.

La dimension de la zone de superposition doit être suffisante pour permettre une identification précise des repères d'alignement radio-opaques et aussi petite que possible afin d'obtenir une surface totale d'acquisition aussi grande que possible en une seule irradiation de deux ou plusieurs supports radio-sensibles ou en plusieurs irradiations successives d'un ou de plusieurs supports radio-sensibles.

Les surfaces radio-sensibles peuvent soit être placées dans un même plan, auquel cas les images sont acquises successivement - c'est à dire au moyen de plusieurs irradiations successives - , soit se trouver dans des plans parallèles et adjacents, auquel cas les images sont acquises soit simultanément - c'est à dire au moyen d'une seule irradiation - soit successivement - c'est à dire au moyen de plusieurs irradiations successives.

De préférence, il est de plus fait usage d'au moins un repère de latéralité radio-opaque entre la source de rayons X et chacune des surfaces radio-sensibles, ledit repère de latéralité étant positionné hors du plan central des rayons X afin de pouvoir déterminer la latéralité des images radiographiques acquises.

Au cas où les surfaces radio-sensibles ne sont pas placées dans le même plan, la différence de distance séparant les surfaces radio-sensibles d'un foyer d'émission des rayons X est responsable d'un facteur d'agrandissement du segment de l'objet radiographié différent pour l'image formée sur la surface radio-sensible la plus éloignée du foyer d'émission et pour l'image formée sur la surface radio-sensible la plus proche du foyer d'émission. Si la distance séparant les surfaces radio-sensibles du foyer d'émission est courte, la différence de facteur d'agrandissement sera important et nécessitera une correction des images avant le montage. Si la distance séparant les surfaces radio-sensibles du foyer d'émission est grande, la différence de facteur d'agrandissement sera négligeable et ne nécessitera pas de correction des images avant le montage.

Au cas où les surfaces radio-sensibles sont placées dans le même plan, ce qui constitue une mode de réalisation avantageux de l'invention, la distance séparant les surfaces radio-sensibles du foyer d'émission est substantiellement identique pour toutes les surfaces radio-sensibles, et il n'y a donc pas lieu d'effectuer cette correction.

L'invention concerne également un système et un dispositif pour l'acquisition d'images radiographiques d'un segment d'objet, dont on trouvera une description dans les revendications et dans la description détaillée de modes de réalisation particuliers.

### Brève description des figures:

- **Fig 1 :**: illustre schématiquement un système de radiographie comprenant un exemple de dispositif d'acquisition d'images radiographiques selon le principe de l'invention ;
- **Fig 2 :**: est une vue de face du système de la fig.1 ;
- **Fig 3 :**: est une vue du haut du système de la fig.1 ;
- **Fig 4a :**: est une vue en perspective du dispositif de la Fig.1 ;
- **Fig 4b :**: est une vue en coupe du dispositif de la Fig.1 ;
- **Fig 5 :**: illustre un exemple de dispositif selon l'invention pour l'acquisition simultanée sur plusieurs cassettes situées dans des plans adjacents parallèles ;
- **Fig 6a :**: illustre un exemple de dispositif selon l'invention pour l'acquisition successive d'images situées dans des plans adjacents parallèles - première acquisition par exemple sur deux cassettes.
- **Fig 6b :**: illustre un exemple de dispositif selon l'invention pour l'acquisition successive d'images situées dans des plans adjacents parallèles - deuxième acquisition par exemple sur une troisième cassette ;
- **Fig 7a :**: illustre un exemple de dispositif selon l'invention pour l'acquisition successive d'images situées dans un plan identique - première acquisition par exemple sur deux cassettes ;
- **Fig 7b :**: illustre un exemple de dispositif selon l'invention pour l'acquisition successive d'images situées dans un plan identique - deuxième acquisition par exemple sur une troisième cassette ;
- **Fig 8 :**: illustre un exemple de dispositif selon l'invention pour l'acquisition simultanée de plusieurs images situées dans des plans adjacents parallèles, les cassettes étant disposées de bas en haut et d'arrière en avant ;
- **Fig 9 :**: illustre un exemple de dispositif selon l'invention pour l'acquisition simultanée de deux images situées dans des plans parallèles adjacents, les cassettes étant disposées de haut en bas, d'avant en arrière ;
- **Fig 10a :**: illustre un exemple de dispositif selon l'invention pour l'acquisition successive de deux images situées dans des plans parallèles adjacents - première exposition sur une première cassette ;
- **Fig 10b :**: illustre un exemple de dispositif selon l'invention pour l'acquisition successive de deux images situées dans des plans parallèles adjacents - deuxième exposition sur une deuxième cassette ;
- **Fig 11 :**: illustre un exemple de dispositif selon l'invention pour l'acquisition simultanée sur plusieurs cassettes disposées de bas en haut, d'avant en arrière sur un statif composé de trois rangées parallèles ;
- **Fig 12a :**: illustre un exemple de dispositif selon l'invention pour l'acquisition successive sur plusieurs cassettes disposées de bas en haut, d'avant en arrière sur un statif composé de trois rangées parallèles - première exposition sur deux cassettes ;
- **Fig 12b :**: illustre un exemple de dispositif selon l'invention pour l'acquisition successive sur plusieurs cassettes disposées de bas en haut, d'avant en arrière sur un statif composé de trois rangées parallèles - deuxième exposition sur une troisième cassette ;
- **Fig 13a :**: illustre un exemple de dispositif selon l'invention pour l'acquisition successive sur plusieurs cassettes disposées en deux rangées parallèles - première exposition sur deux cassettes ;
- **Fig 13b :**: illustre un exemple de dispositif selon l'invention pour l'acquisition successive sur plusieurs cassettes disposées en deux rangées parallèles - deuxième exposition sur une troisième cassette ;
- **Fig 14a :**: illustre un exemple de dispositif selon l'invention pour l'acquisition successive sur plusieurs cassettes disposées sur une seule rangée - première exposition sur deux cassettes ;
- **Fig 14b :**: illustre un exemple de dispositif selon l'invention pour l'acquisition successive sur plusieurs cassettes disposées sur une seule rangée - deuxième exposition sur une troisième cassette ;
- **Fig 15**: illustre un exemple de dispositif selon l'invention pour l'acquisition successive d'images situées dans un plan identique - deuxième acquisition : variante de support disposé dans le même statif avec résultat comparable à la Fig 7b.

Les figures ne sont pas dessinées à l'échelle.
Généralement, des éléments identiques sont dénotés par les mêmes références dans les figures.

### Description détaillée de modes de réalisation particuliers :

### 1 Acquisition.

### 1.1 Le support radio-sensible.

1.1.1 Le support radio-sensible est constitué d'une cassette de format standard contenant une surface radio-sensible constituée par exemple d'un film radiographique ou d'un écran photostimulable.
1.1.2 Le repérage de l'orientation du support radio-sensible au moment de l'acquisition de l'image garantit la sécurité des manipulations des images lors de la phase de montage de l'image panoramique :
   a) un support radio-sensible de type «film radiographique conventionnel » est parfois pourvu d'un repère de position constitué par une ou plusieurs encoches sur un bord du film radiographique ; si ce n'est pas le cas, nous proposons d'équiper chaque cassette d'un repère radio-opaque de latéralité permettant à la lecture de l'image d'identifier de façon irréfutable la position du film au moment de l'acquisition de l'image radiographique ;
   b) un support radio-sensible de type «plaque au phosphore » n'est pas équipé de dispositif de repérage : nous proposons d'équiper chaque «plaque au phosphore » d'un dispositif de marquage de latéralité de la plaque
      - soit dans la cassette au moyen d'un signe ou d'une lettre d'identification appartenant à la cassette et/ou à la plaque au phosphore, visible de façon permanente sur toute image radiographique ou uniquement sur toute image en phase de pré-processing,
      - soit en utilisant un dispositif de watermarking de l'image numérique dès le processus de lecture des données numériques de l'acquisition radiographique ;
      ce dispositif est complété par un enregistrement historique de toutes les manipulations numériques d'images intervenues entre l'acquisition et le montage panoramique afin de garantir la qualité et sécurité de la lecture des images et de la reconstruction anatomique panoramique.

### 1.2.1 Le Principe Technique.

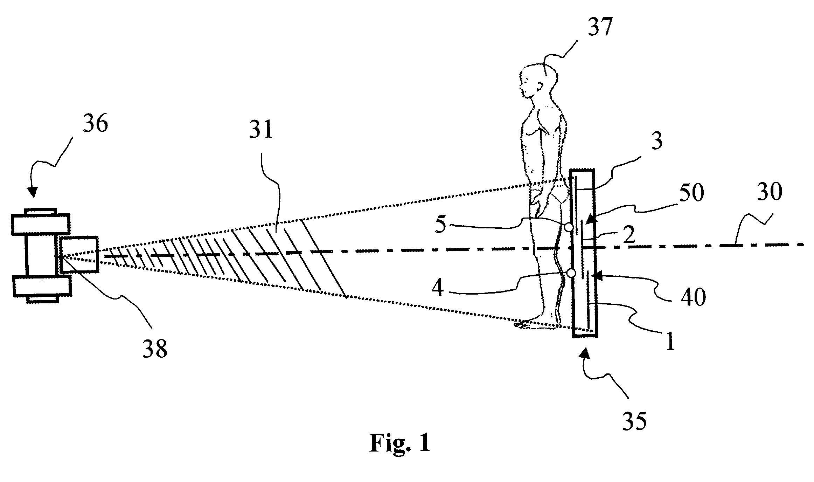

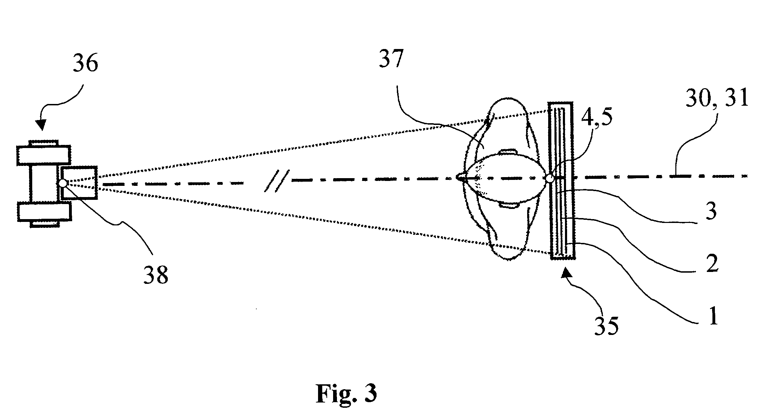

Il est proposé d'utiliser un statif (35) dans lequel les cassettes seront positionnées de façon se chevaucher dans une zone de superposition (40). L'orientation des rayons X - et en particulier le plan central des rayons X (31) - ne varient pas au cours de l'acquisition. De préférence, la position et l'orientation de la source de rayons X (36) et du segment ne varient pas lors de l'acquisition. Il est de préférence également fait usage de repères communs d'alignement radio-opaques, positionnés dans la zone de superposition (40) de deux surfaces radio-sensibles adjacentes (1,2) de façon à être reproduits sur chacune d'elles, lesdits repères d'alignement étant positionnés dans un plan central des rayons X (31) perpendiculaire aux plans des surfaces radio-sensibles (1,2), ledit plan central (31) formant un axe d'intersection (32) avec lesdites surfaces. ( Fig 3a,3b, Fig 1, Fig 2 ).

### 1.2.2 Le «statif ».

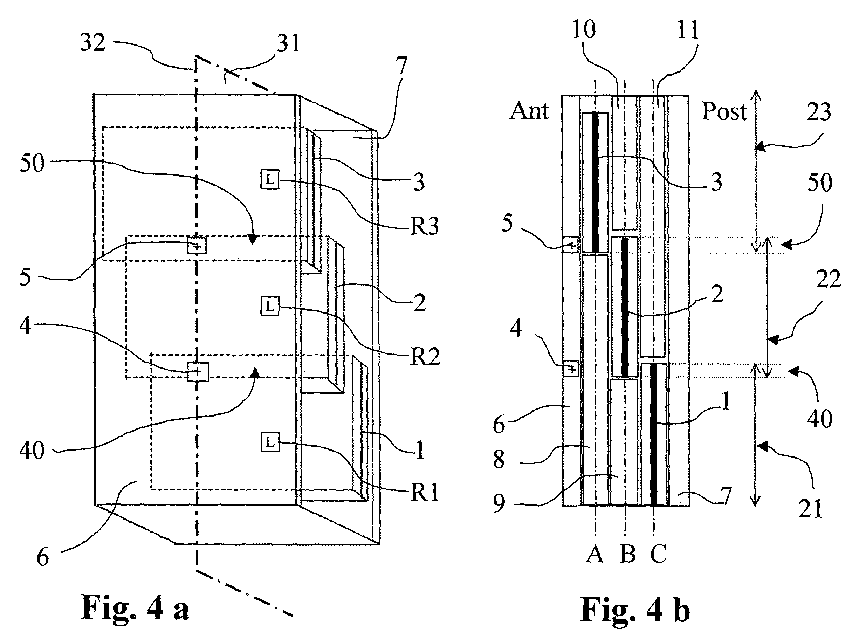

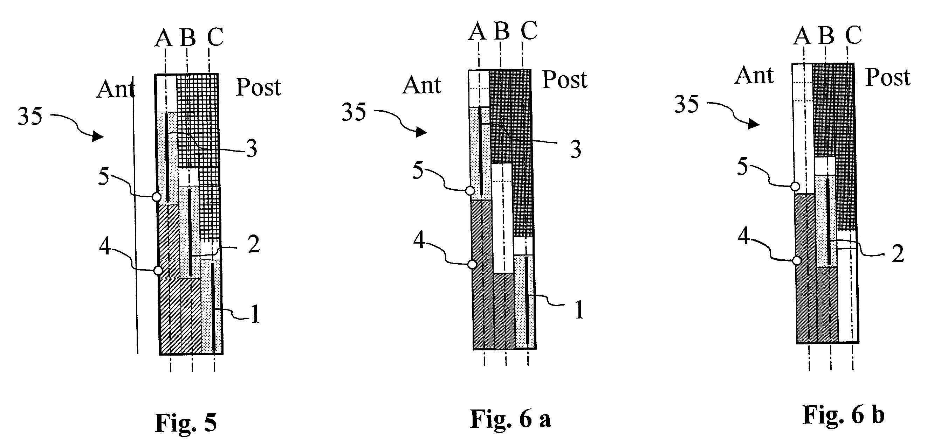

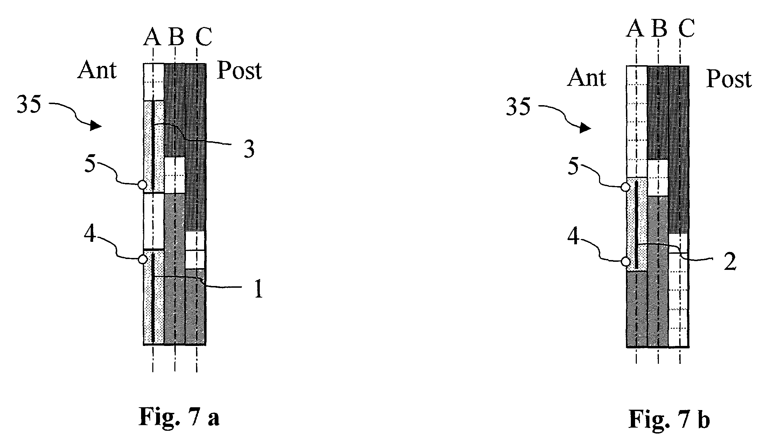

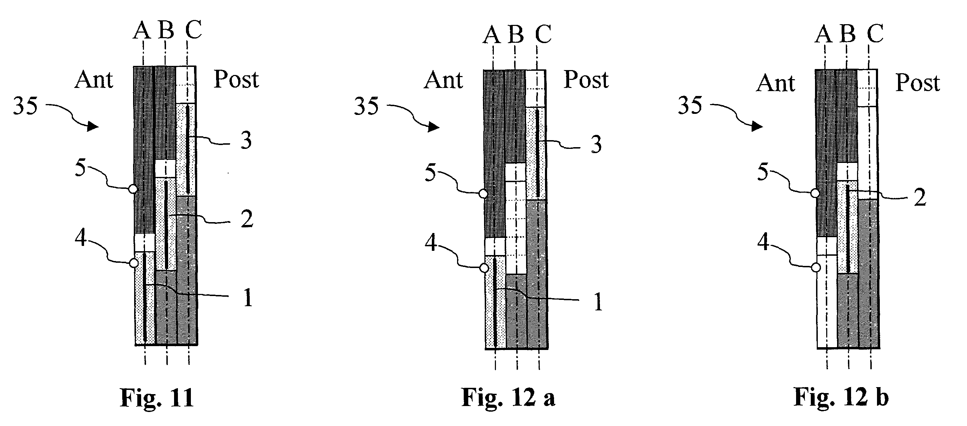

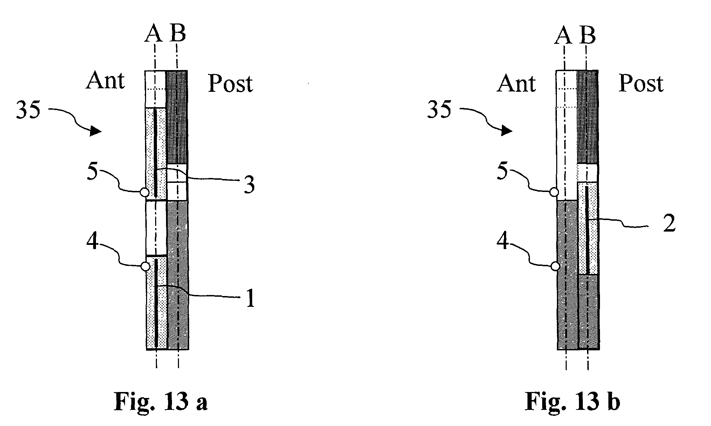

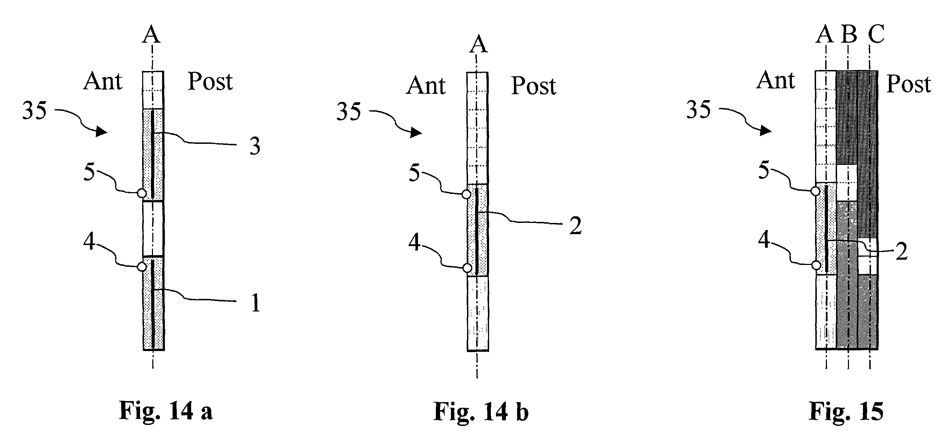

1.2.2.1 Le statif est constitué d'un espace dans lequel sont rangées les cassettes verticalement, la face radio-sensible dirigée vers la source radiogène, l'axe vertical des cassettes se confond avec l'axe d'intersection des rayons X (32).( Fig : 1, 2, 3 )
1.2.2.2 Les dimensions du statif répondent aux critères suivants :
   L'épaisseur du statif est un multiple de l'épaisseur d'une cassette, calculé pour recevoir une ou plusieurs cassettes simultanément ou alternativement.
   La hauteur du statif est au moins égale à un multiple de la hauteur d'une cassette diminuée de la hauteur des superpositions.
   A titre d'exemple pratique, dans le cas d'un statif permettant l'acquisition d'une image des membres inférieurs (voir paragraphe 1.3), le statif peut être schématiquement représenté par un volume divisé d'avant en arrière en 3 espaces de l'épaisseur de 15 mm qui sont centrés sur des plans de symétrie (A, B, C) et divisé de bas en haut en 3 niveaux (21,22,23), chaque niveau ayant une hauteur d'une cassette au maximum, (Fig.4b) ». (Fig : 4b= (1)= Cassette 1 ; (2) = Cassette 2 ; (3) = Cassette 3 ; (4) = Repère d'alignement commun des Cassettes 1 et 2 , situé dans la zone de superposition des surfaces radio-sensibles (40); (5)= repère d'alignement commun des Cassettes 2 et 3 , situé dans la zone de superposition des surfaces radio-sensibles (50); (6)= paroi antérieure contenant les repères (4) et (5) ;(7)= paroi postérieure ; (8)= support interne ; (9) = support interne ; (10) support interne ; (11) = support interne.
   Les supports internes sont de forme substantiellement parallélépipédique.
   Des variantes du dispositif peuvent se composer en pratique de trois, de deux ou d'une rangée de deux ou plusieurs niveaux pouvant accepter indifféremment des cassettes disposées d'avant en arrière ou inversement, de bas en haut ou inversement. ( Fig 5 à Fig 15 ).
1.2.2.3 Un dispositif de supports internes dans le statif permet de positionner les cassettes de façon à obtenir une zone de superposition des surfaces radio-sensibles (1,2,3). ( Fig 4b : Le **dispositif de supports** internes règle la hauteur et la position antéro-postérieure des Cassette 1, Cassette 2, Cassette 3 ). Ces supports internes sont de forme substantiellement parallélépipédique.
1.2.2.4 La superposition de deux images adjacentes des régions examinées sur les radiographies est rendue possible grâce à l'exposition **simultanée** ( Fig 5 ) ou **successive** ( Fig 6a et Fig 6b) des surfaces radio-sensibles contenues dans les cassettes et disposées dans un **plan adjacent parallèle** ou dans **un plan identique** (Fig 7a et Fig 7b).
1.2.2.5 La superposition de deux images adjacentes des régions examinées sur les radiographies est rendue possible grâce à l'exposition **simultanée** de deux ou plusieurs cassettes lorsque le support interne permet le positionnement en deux ou plusieurs plans parallèles adjacents des cassettes partiellement superposées verticalement ; (Fig 5 soit de haut en bas et d'avant en arrière, ou Fig 11 : variante inverse de bas en haut et d'avant en arrière ).
   Exemple : L'exposition de trois cassettes peut s'effectuer sur des cassettes disposées en une, deux ou trois rangées parallèles adjacentes. (Fig 14a et 14b, Fig 13a et 13b, Fig 5 à 10b)
   L'exposition **simultanée** de deux ou plusieurs cassettes a pour avantage que la position et l'axe du tube radiogène sont identiques pour toutes les cassettes et le rayon principal du faisceau de rayons X est identique pour toutes les cassettes. ( Fig 5 et Fig 11: exposition simultanée des Cassettes 1, Cassette 2 et Cassette 3)
   L'ordre de disposition antéro-postérieur ou postéro-antérieur des cassettes est déterminé par la disposition du support interne et il en sera tenu compte pour le calcul du **coefficient d'agrandissement** des images. ( Fig 5 et Fig 11 )
   L'exposition **simultanée** de deux ou plusieurs cassettes a aussi pour conséquence que le bord de la cassette, s'il n'est pas parfaitement radio transparent, sera responsable d'une image d'artéfact sur la surface radio-sensible superposée du niveau adjacent postérieur.
1.2.2.6 La superposition de deux images adjacentes des régions examinées sur les radiographies est rendue possible grâce à l'exposition **successive** des récepteurs radio-sensibles placés dans des plans adjacents parallèles lorsque le support interne permet de positionner successivement les cassettes aux niveaux adjacents.
   L'ordre d'exposition des cassettes peut être inversé en tenant compte de la position des différentes cassettes.
   Exemple : L'exposition de trois cassettes peut s'effectuer sur des cassettes disposées en une rangée ( Fig 14a et 14b ),
   en deux rangées parallèles adjacentes ( Fig 13a et 13b)
   ou trois rangées parallèles adjacentes( Fig 6a et 6b, Fig 12a et 12b )
   L'exposition **successive** désigne la prise de deux ou plusieurs clichés radiographiques successivement, sans modification du centrage du tube radiogène, sans aucune mobilisation du patient entre les différentes expositions, ce qui a pour conséquence que la position et l'axe du tube radiogène sont identiques pour toutes les expositions, et le rayon principal du faisceau de rayons X est identique pour toutes les cassettes qui sont placées dans des **plans adjacents parallèles** pour chaque exposition successive.
   L'ordre de disposition antéro-postérieur ou postéro-antérieur des cassettes est déterminé par la disposition du support interne et il en sera tenu compte pour le calcul du coefficient d'agrandissement des images.
   L'exposition **successive** de deux ou plusieurs cassettes dans des plans adjacents parallèles a aussi pour avantage que le bord de la cassette, même s'il n'est pas parfaitement radio transparent, ne sera en aucun cas responsable d'une image d'artéfact sur la surface radio-sensible superposée du niveau adjacent postérieur.
   (fig. 6a : exposition de la Cassette 1 et de la Cassette 3, suivie de Fig 6b : exposition de la Casette 2).
1.2.2.7 La superposition de deux images adjacentes des régions examinées sur les radiographies est rendue possible grâce à l'exposition **successive** des récepteurs radio-sensibles placés successivement dans un **plan identique** lorsque le support interne permet de disposer sur un seul plan vertical les différentes cassettes exposées successivement, ce qui élimine toute différence de coefficient d'agrandissement et tout risque d'artéfact de bord de cassette ( Fig 7a et Fig 7b ; Fig 14a et Fig 14b ).
   L'exposition **successive** de deux ou plusieurs clichés radiographiques successivement, peut être obtenue sans modification du centrage du tube radiogène, sans aucune mobilisation du patient entre les différentes expositions, pour toutes les cassettes qui sont placées alternativement dans un **plan identique** pour chaque exposition.
   L'ordre d'exposition des cassettes peut être inversé selon la position du support interne du statif mais cet ordre d'exposition n'a aucune influence sur le coefficient d'agrandissement attendu que les différentes cassettes sont situées sur un plan identique.
   Exemple : Pour l'exposition de trois cassettes, le support interne est déplacé vers l'arrière, libérant un espace vertical de l'épaisseur d'une cassette. Les cassettes sont placées verticalement dans un plan identique ; pour la première exposition (Fig 7a) un espace intermédiaire est créé entre les cassettes 1 et 3 par positionnement d'un support intermédiaire dont la hauteur est calculée pour permettre une superposition de chaque cassette respectivement avec la zone qui sera occupée par cassette 2 placée ultérieurement (Fig 7b) dans le plan A Niveau 2 par inversion du support interne du statif. ( NB : la même position plan A Niveau 2 peut être obtenue en laissant le support interne déplacé en arrière et en plaçant devant celui-ci un support intermédiaire de hauteur adéquate : Fig 15) .

### 1.2.3 La face antérieure du statif.

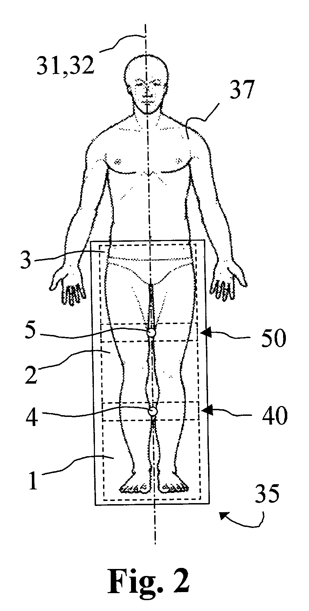

1.2.3.1 La face antérieure du statif, située du côté de la source radiogène, sera radiotransparente et pourra comporter une grille anti-diffusante, focalisée ou non, dont l'axe sera substantiellement parallèle à l'axe d'intersection des rayons X, à l'axe sagittal du patient et à l'axe vertical des cassettes. ( Fig 4b : (6) = face antérieure du statif ) ( Fig 2 et 3 : (30) = axe central du faisceau des rayons X).
1.2.3.2 Les repères communs d'alignement radio-opaques pourront par exemple être placés de façon permanente sur la face antérieure du statif sur l'axe d'intersection des rayons X ; ( Fig 4a et 4b : (4) = repère radio-opaque commun destiné aux cassette (1) et cassette (2) situé dans la zone de superposition (40); (5) = repère radio-opaque commun destiné aux cassette (2) et cassette (3) situé dans la zone de superposition (50).)
1.2.3.3 La spécificité de la dimension : la dimension du repère commun d'alignement radio-opaque sera aussi faible que possible et de préférence comprise ente une et cinq fois l'inverse de la résolution maximale des images, de façon à garantir par la superposition des images du repère commun d'alignement radio-opaque une assemblage optimal de l'ensemble de l'image radiographique (par exemple : si en image numérique dont la résolution spatiale est substantiellement de 5 pixels par mm, la largeur d'un pixel étant substantiellement de 0,2 mm, nous proposons d'utiliser un repère dont la largeur est substantiellement de 0,2 mm : ceci permet de fusionner deux images avec une précision à un pixel près.)
1.2.3.4 Deux repères communs d'alignement radio-opaques sont placés dans la zone de superposition des images radiographiques, de façon à obtenir l'image de ces deux repères d'alignement sur chaque image radiographique non parallèle située sur un plan parallèle, permettant d'assembler les deux plans adjacents.
1.2.3.5 En outre des repères radio-opaques de latéralité (L1,L2,L3) pourront être placés de façon permanente sur la face antérieure du statif de façon à identifier de façon indélébile la latéralité du patient dont l'image est enregistrée sur chaque cassette utilisée pour examiner l'ensemble du segment étudié, tenant compte de l'orientation antéro-postérieure ou postéro-antérieure du faisceau des rayons X par rapport au patient examiné.
   a) si le support radio-sensible est de type film radiographique conventionnel, nous proposons la mise en place d'un repère radio-opaque de latéralité fixe sur la cassette et/ou sur le film de façon à garantir l'identification irréfutable de latéralité de l'image par rapport au patient lors des manipulations de visualisation et de montage ;
   b) si le support radio-sensible est de type photostimulable, nous proposons la mise en place d'un dispositif de repérage radio-opaque de la cassette et de l'écran ou d'un dispositif de watermarking de l'image numérique appliqué dès la lecture de l'information numérique en vue de marquer de façon indélébile la position du support radio-sensible par rapport au patient au moment de l'acquisition de l'image, en vue garantir l'identification irréfutable de latéralité de l'image par rapport au patient lors des manipulations de montage et d'assurer la traçabilité des manipulations d'images pouvant intervenir entre l'acquisition numérique et le montage final de l'image panoramique.
1.2.3.6 Entre la source radiogène et le support radio-sensible pourront être interposés des éléments de filtration des rayons x de façon à homogénéiser le résultat global de l'exposition radiographiques ; les supports internes radio transparents peuvent être réalisés avec des matériaux participants à la filtration adéquate du rayonnement pour les segments étudiés dans le niveau analysé ( Fig 4b : (8) et (9)= supports internes, fixes ou amovibles. )

### 1.2.4 La face postérieure du statif.

1.2.4.1 La face postérieure du statif sera complétée d'éléments permettant de maintenir le parallélisme des cassettes selon la description précédente. (Fig 4b : (7) = face postérieure ; disposition des supports internes: (10)= support médian ; (11) support postérieur )
1.2.4.2 Attendu que dans le cas d'utilisation de cassettes superposées exposées simultanément, la suppression de la feuille de protection du rétro diffusé de la cassette antérieure est nécessaire pour obtenir une image significative du repère commun d'alignement radio-opaque sur la cassette postérieure, la face postérieure du statif sera éventuellement complétée d'un élément de radioprotection visant à empêcher le rayonnement rétro diffusé de nuire à la qualité de l'image radiographique. ( En pratique, dans le respect des normes en usage pour les cassettes de radiographie, le prototype comporte une feuille de plomb de 0,2 mm d'épaisseur enrobée dans une résine synthétique assurant la protection de toute la surface de 30 x 120 cm du rayonnement rétro diffusé.)

### 1.2.5 Procédures d'acquisition (exemples non exhaustifs)

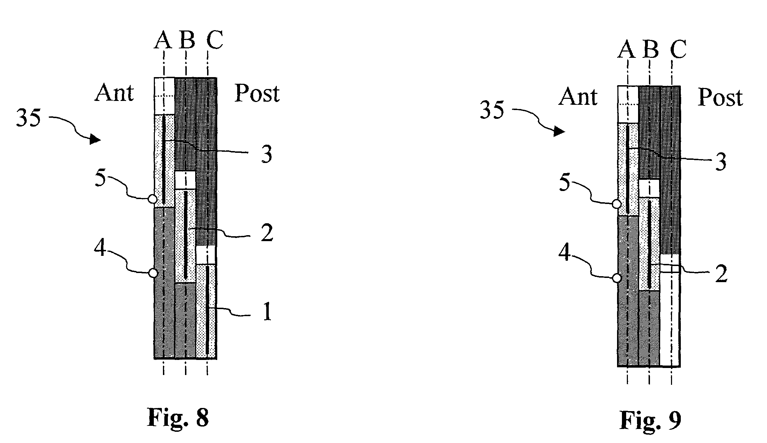

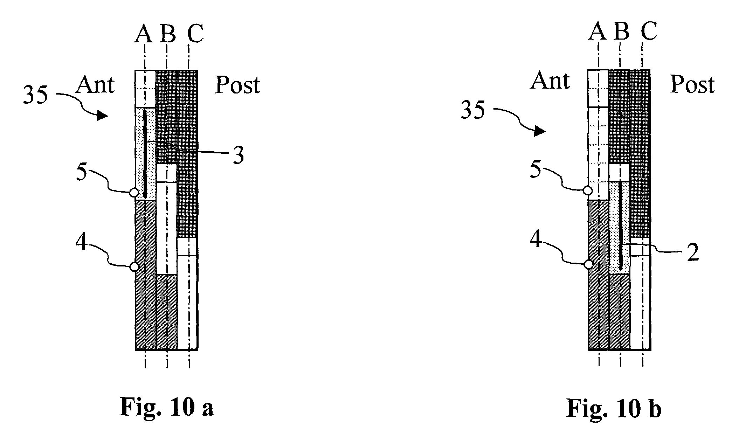

1.2.5.1 Dans un cas particulier, les cassettes pourront être exposées aux rayons X :
   A) soit avec superposition simultanée de deux ou plusieurs cassettes, de haut en bas, d'avant en arrière, (ou inversement), donc en une seule exposition aux rayons X, (Fig 5 et Fig 11: Exemples d'exposition simultanée de 3 cassettes superposées.)
   B) soit avec superposition successive de 3 cassettes placées dans **des plans adjacents parallèles :** la procédure consiste par exemple à positionner les Cassettes 1 et 3 (Fig 6a : les cassettes espacées sont placées dans des plans adjacents parallèles pour la première exposition) ; les exposer, les retirer et ensuite positionner au niveau intermédiaire la Cassette 2 placée dans un autre plan parallèle (Fig 6b ), et procéder à une seconde exposition aux rayons X .
   C) soit avec une exposition successive des cassettes placées alternativement dans un **plan identique :** la procédure consiste par exemple à positionner les Cassettes 1 et 3 dans le plan A, séparées d'un espace intermédiaire qui est matérialisé par un support intermédiaire amovible ( Fig 7a) ; exposer, retirer les Cassettes 1 et 3 ; inverser le support interne et ( Fig 7b ) placer la Cassette 2 au Niveau 2 dans le plan A ; exposer la Cassette 2. ( Il en résulte que les surfaces radio-sensibles des Cassettes 1 et 3 de la Fig 7a et de la Cassette 2 de la Fig 7b sont toutes situées dans un plan identique. )
1.2.5.2 Dans d'autres cas particuliers, les cassettes pourront être exposées aux rayons X :
   A) soit avec superposition simultanée de deux (ou plusieurs cassettes), de haut en bas, d'avant en arrière, (ou inversement), donc en une seule exposition aux rayons X, (Fig 9 : Exemple d'exposition simultanée de deux cassettes superposées.)
   B) soit avec superposition successive de deux (ou plusieurs) cassettes placées dans des plans adjacents parallèles, de haut en bas, d'avant en arrière ou inversement, donc en pratiquant au moins deux expositions radiographiques successives, ( Fig 10a et Fig 10b ).
   C) soit avec une exposition successive des Cassette 3 ( Fig 10a ) puis Cassette 2 (ou inversement) placées alternativement dans un plan identique, après avoir inversé le support interne des cassettes du statif prévu à cet effet ( Fig 7b ), ou après avoir mis en place un support accessoire prévu à cet effet (Fig 15).

### 1.2.6 Variantes du STATIF.

1.2.6.1 Le « STATIF » décrit en 1.2.2 peut être utilisé **avec inversion** des supports internes permettant de positionner les cassettes exposées simultanément ( Fig 11: Exposition simultanée de plusieurs cassettes ) ou successivement ( Fig 12a et Fig 12b : Expositions successives ) dans un statif composé de **trois rangées parallèles :**
1.2.6.2 Le « STATIF » peut ne comporter que **deux rangées** de deux ou plusieurs niveaux verticaux destinés à recevoir les cassettes exposées simultanément ou successivement ( Fig 13a et Fig 13b.)
1.2.6.3 Le « STATIF » peut ne comporter qu'**une seule rangée** de deux ou plusieurs niveaux destinés à recevoir les cassettes exposées successivement ( Fig 14a et Fig 14b.)

### 2 Montage.

### 2.1 Montage panoramique d'images sur support physique ou sur support numérique.

Le montage sera réalisé par assemblage du support physique de l'image radiographique s'il s'agit d'une acquisition directe sur film radio-sensible ou s'il s'agit d'une acquisition numérique dont on souhaite disposer d'un format déterminé pour la présentation du résultat.
Le montage sera réalisé par fusion numérique des images acquises sur récepteur radio-sensible ( Ecran dit «au Phosphore ») et pourra être présenté soit sur support numérique, soit imprimé sur support transparent ou opaque.
La manipulation des images numériques sera faite avec rigueur : afin d'éviter les erreurs de latéralité nous proposons d'utiliser un dispositif de marquage de latéralité (1.2.3.5) qui peut utilement être complété par un dispositif de traçage des manipulations des images grâce à une mémorisation de l'historique de toutes les modifications informatiques de l'image.

### 2.2 Montage panoramique d'images radiographiques acquises par expositions successives de surfaces radio-sensibles placés dans un plan identique.

Attendu qu'il n'y a pas de différence de coefficient d'agrandissement entre les images formées sur les différentes surfaces radio-sensibles, le montage pourra être effectué directement par assemblage deux à deux des images en superposant l'image commune du repère d'alignement situé dans la zone de superposition.

### 2.3 Montage panoramique d'images radiographiques acquises par une exposition simultanée ou par des expositions successives de surfaces radio-sensibles placées dans deux ou plusieurs plans adjacents parallèles.

Pour procéder au montage il sera tenu compte de la différence de coefficient d'agrandissement :
- la distance séparant les surfaces radio-sensibles de la source radiogène est responsable d'un facteur d'agrandissement différent sur l'image formée par la surface radio-sensible la plus éloignée de l'objet radiographié et sur l'image formée par la surface radio-sensible la plus proche de l'objet ;
- si la distance entre la source radiogène et l'objet est courte, le facteur d'agrandissement sera important et nécessitera une correction des images avant le montage ;
- si la distance la source radiogène et l'objet est longue, le facteur d'agrandissement sera négligeable et ne nécessitera pas de correction des images avant le montage.

La correction d'image sera effectuée manuellement ou automatiquement par logiciel en tenant compte de la position relative des différents récepteurs radio-sensibles : après avoir sélectionné dans une rangée et un niveau déterminés une image prise pour référence et pour laquelle aucune correction n'est apportée, la ou les autres images sont corrigées, réduites ou agrandies, selon le coefficient d'agrandissement lié à la position relative de cette image par rapport à l'image prise pour référence.

En résumé, l'invention peut être décrite comme suit :
Méthode et dispositif permettant l'obtention d'une image radiographique d'une région d'un objet (37) dont les dimensions sont supérieures aux dimensions d'acquisition radiographique usuelles grâce à l'utilisation d'au moins deux surfaces radio-sensibles (1,2) disposées dans un même plan ou dans plusieurs plans parallèles adjacents et de manière à présenter une zone de superposition partielle (40) lors de leur exposition aux rayons X par une source radiogène (36). Au moins un repère commun d'alignement radio-opaque (4) est disposé dans un plan central des rayons X (31) et au droit de la zone de superposition partielle (40) de manière à ce que l'image de ce repère d'alignement (4) se forme sur les au moins deux surfaces (1,2) avec une erreur de parallaxe considérablement réduite. Les images radiographiques ainsi acquises sur les surfaces radio-sensibles peuvent ensuite être assemblées par superposition des images du repère d'alignement (4). Au cas où les surfaces radio-sensibles (1,2) sont disposées dans des plans parallèles adjacents (A,B,C), une correction éventuelle de la différence d'agrandissement des images est effectuée.

## Revendications

1. Méthode d'acquisition d'images radiographiques d'un segment d'objet (37) par irradiation du segment placé entre une source de rayons X (36) et au moins deux surfaces radio-sensibles (1,2), **caractérisée en ce que** les au moins deux surfaces radio-sensibles (1,2) sont positionnées de manière à se chevaucher au moins partiellement, définissant ainsi une zone de superposition (40), et **en ce que** la position et l'orientation de la source de rayons X (36) et du segment ne varient pas au cours de l'acquisition.

2. Méthode d'acquisition d'images radiographiques selon la revendication 1, **caractérisée en ce qu'**au moins un repère commun d'alignement radio-opaque (4) est positionné entre la source de rayons X (36) et les au moins deux surfaces radio-sensibles (1,2), dans un plan central des rayons X (31) et dans ou au droit de la zone de superposition (40), afin qu'une image dudit repère d'alignement (4) apparaisse sur les au moins deux surfaces radio-sensibles (1,2).

3. Méthode d'acquisition d'images radiographiques selon la revendication 2, **caractérisée en ce qu'**au moins une dimension (en mm)du repère d'alignement radio-opaque (4) est comprise entre une et cinq fois l'inverse de la résolution graphique (en pixels par mm) des images radiographiques acquises.

4. Méthode d'acquisition d'images radiographiques selon l'une quelconque des revendications 1 à 3, **caractérisée en ce qu'**au moins une première des surfaces radio-sensibles (1) est positionnée dans un premier plan (A) substantiellement perpendiculaire au plan central des rayons X (31) lors d'une première irradiation du segment et **en ce qu'**au moins une deuxième des surfaces radio-sensibles (2) est positionnée dans le premier plan (A) lors d'une deuxième irradiation du segment.

5. Méthode d'acquisition d'images radiographiques selon l'une quelconque des revendications 1 à 3, **caractérisée en ce que** les surfaces radio-sensibles (1,2) sont positionnées dans des plans (A,B) substantiellement perpendiculaires au plan central des rayons X (31), lesdits plans (A,B) étant substantiellement parallèles et adjacents et **en ce que** l'acquisition des images se fait en une seule irradiation du segment.

6. Méthode d'acquisition d'images radiographiques selon l'une quelconque des revendications 1 à 3, **caractérisée en ce qu'**au moins une première des surfaces radio-sensibles (1) est positionnée dans un premier plan (A) substantiellement perpendiculaire au plan central des rayons X (31) lors d'une première irradiation du segment et **en ce qu'**au moins une deuxième des surfaces radio-sensibles (2) est positionnée dans un deuxième plan (B) substantiellement parallèle et adjacent au premier plan (A) lors d'une deuxième irradiation du segment.

7. Méthode d'acquisition d'images radiographiques selon l'une quelconque des revendications précédentes, **caractérisée en ce qu'**au moins un repère de latéralité radio-opaque (L1) et positionné entre la source de rayons X (36) et chacune des surfaces radio-sensibles (1,2), et hors du plan central des rayons X (31), afin de pouvoir déterminer la latéralité des images radiographiques acquises.

8. Méthode d'acquisition d'images radiographiques selon l'une quelconque des revendications précédentes, **caractérisée en ce qu'**il s'agit d'une méthode d'acquisition numérique.

9. Méthode d'acquisition d'images radiographiques selon la revendication 8, **caractérisée** en ce la méthode comprend la surimpression numérique d'une marque de latéralité à chaque image acquise (« watermarking »).

10. Méthode d'assemblage d'images radiographiques acquises par une méthode d'acquisition selon l'une quelconque des revendications 2 à 9, **caractérisée en ce que** l'assemblage consiste à reconstituer une image complète du segment de l'objet (37) en superposant des parties communes des images radiographiques correspondantes à la zone de superposition (40).

11. Méthode d'assemblage d'images radiographiques selon la revendication 10, **caractérisée en ce que** les images acquises sont redimensionnées avant superposition, de manière à corriger une éventuelle différence de coefficient d'agrandissement des images par l'utilisation de paramètres physiques relatifs aux distances entre un foyer d'émission des rayons X (38), l'au moins un repère d'alignement radio-opaque (4) et les au moins deux surfaces radio-sensibles (1,2).

12. Méthode d'assemblage d'images radiographiques selon l'une quelconque des revendications 10 à 11, **caractérisée en ce que** les parties communes des images radiographiques sont superposées de manière à faire coïncider les images des repères communs d'alignement radio-opaques (4).

13. Dispositif (35) pour l'acquisition d'images radiographiques d'un segment d'objet (37) placé - en fonctionnement - entre une source de rayons X (36) et le dispositif (35), **caractérisé en ce que** le dispositif (35) comporte des moyens pour positionner au moins deux surfaces radio-sensibles (1,2) de manière à faire se chevaucher au moins partiellement lesdites surfaces (1,2) dans une zone de superposition (40).

14. Dispositif (35) pour l'acquisition d'images radiographiques selon la revendication 13, la source de rayons X (36) comportant un axe central (30) et un plan central (31), **caractérisé en ce que** les moyens de positionnement sont des moyens de positionnement dans une direction selon l'axe central (30) et/ou dans une direction selon un axe d'intersection (32) entre le plan central (31) et le dispositif.

15. Dispositif (35) pour l'acquisition d'images radiographiques selon la revendication 14, **caractérisé en ce que** les moyens de positionnement comprennent au moins un support interne (8) de forme substantiellement parallélépipédique.

16. Dispositif (35) pour l'acquisition d'images radiographiques selon l'une quelconque des revendications 14 à 15, **caractérisé en ce que** le dispositif (35) comporte en outre au moins un repère commun d'alignement radio-opaque (4), ledit repère d'alignement (4) étant positionné sur un l'axe d'intersection (32) et dans ou au droit de la zone de superposition (40) afin qu'une image dudit repère d'alignement (4) apparaisse sur les au moins deux surfaces radio-sensibles (1,2).

17. Dispositif (35) pour l'acquisition d'images radiographiques selon l'une quelconque des revendications 14 à 16, **caractérisé en ce que** le dispositif (35) comporte en outre au moins un repère radio-opaque de latéralité (L1) disposé entre la source de rayons X (36) et chacune des surfaces radio-sensibles (1,2), et dans une position décalée par rapport à l'axe d'intersection (32) afin de pouvoir déterminer la latéralité des images radiographiques acquises.

18. Système pour l'acquisition d'images radiographiques d'un segment d'objet (37), le système comprenant une source de rayons X (36) et un dispositif (35), le segment d'objet étant - en fonctionnement - placé entre la source de rayons X (36) et le dispositif (35), **caractérisé en ce que** le dispositif (35) comporte des moyens pour positionner au moins deux surfaces radio-sensibles (1,2) de manière à faire se chevaucher au moins partiellement lesdites surfaces (1,2) dans une zone de superposition (40).

19. Système pour l'acquisition d'images radiographiques selon la revendication 18, la source de rayons X (36) comportant un axe central (30) et un plan central (31), **caractérisé en ce que** les moyens de positionnement sont des moyens de positionnement dans une direction selon l'axe central (30) et/ou dans une direction selon un axe d'intersection (32) entre le plan central (31) et le dispositif.

20. Système pour l'acquisition d'images radiographiques selon la revendication 19, **caractérisé en ce que** les moyens de positionnement comprennent au moins un support interne (8) de forme substantiellement parallélépipédique.
